# EUROPEAN PATENT SPECIFICATION

(11) **EP 4 018 896 B1**
(45) Date of publication and mention of the grant of the patent: **21.10.2026**
(21) Application number: 21853063.2
(22) Date of filing: 30.07.2021
(51) Int. Cl.: A47K 10/16, D21H 27/30

(54) **WATER-DISINTEGRABLE TOILET PAPER HAVING ANTIBACTERIAL PROPERTIES, AND TOILET PAPER ROLL**
WASSERZERSETZBARES TOILETTENPAPIER MIT ANTIBAKTERIELLEN EIGENSCHAFTEN UND TOILETTENPAPIERROLLE
PAPIER TOILETTE POUVANT SE DÉSINTÉGRER DANS L'EAU PRÉSENTANT DES PROPRIÉTÉS ANTIBACTÉRIENNES ET ROULEAU DE PAPIER TOILETTE

(30) Priority: 07.08.2020 JP 2020135371
(43) Date of publication of application: 29.06.2022
(73) Proprietor: Daio Paper Corporation, Shikokuchuo-shi, Ehime 799-0492 (JP)
(72) Inventor: TANIKAWA, Kenya, Fuji-shi, Shizuoka 419-0202 (JP); YASUI, Shuta, Fuji-shi, Shizuoka 419-0202 (JP)
(74) Representative: Williams Powell
(86) International application number: PCT/JP2021/028383
(87) International publication number: WO 2022/030393

(56) References cited:
- JP-A- 2007 061 445
- JP-A- 2012 213 508
- JP-A- 2013 046 679
- JP-A- 2015 167 736
- JP-A- H06 346 029
- US-A1- 2012 301 536
- US-A1- 2018 098 672

## Description

### Technical Field

The present disclosure relates to an antibacterial and water-disintegrable toilet paper and toilet roll.

### Background Art

Recently, in daily life, awareness of an antibacterial action has been increased, and some sensitive users require a toilet paper itself to have an antibacterial property. In addition, with spread of a warm-water toilet seat, there is a tendency that a toilet paper having a large number of stacked layers is required so as not to be torn by water during use.

In order to impart an antibacterial property to a toilet roll, there is a method for spraying an antibacterial agent to a paper tube or an end of the roll. However, an antibacterial effect is not sustained, or the adhesion amount of the antibacterial agent is limited, and the effect cannot be expected in some cases.

On the other hand, when the adhesion amount is large, the end of the roll may be slackened, or sheets of paper may adhere to each other, resulting in a problem. The method for applying the antibacterial agent to a surface of a toilet paper may largely impair the quality of the toilet paper.

In addition, a sheet product such as a kitchen paper or a toilet paper may be obtained by bonding by embossing or the like, and Patent Literature 1 proposes a sheet product in which gluing is performed at an embossed convex portion using carboxymethyl cellulose (CMC) or polyvinyl alcohol (PVA) as an adhesive.

### Citation List

### Patent Literature

Patent Literature 1: JP 4420872 B2
Patent Literature 2: US 2012/301536 A1 discloses an antimicrobial tissue paper and process to manufacture the same.

### Summary of Invention

### Technical Problem

Due to an increase in awareness of an antibacterial action, it is desired by a user to add an antibacterial agent to a toilet paper, but development of a toilet paper having both an antibacterial property and water-disintegrability has not progressed much.

Therefore, a main object of the present invention is to provide a toilet roll that exhibits an antibacterial effect during use, are soft, and have sufficient water-disintegrability.

### Solution to Problem

An absorbent article that has solved the above problem is as follows. According to an aspect of the invention, there is provided a toilet roll according to claim 1.

A toilet paper is described which includes three or four sheet layers,
wherein each sheet has a basis weight of 10.0 to 18.0 g/m²,
each sheet has a paper thickness of 60 to 170 µm,
at least one pair of adjacent sheets are bonded to each other at a large number of bonding points with an adhesive, and
the adhesive is formed of polyvinyl alcohol, and contains benzalkonium chloride.

### Advantageous Effects of Invention

The present disclosure provides a water-disintegrable toilet paper that exhibits an antibacterial property during use and includes a plurality of sheet layers.

### Brief Description of Drawings

Fig. 1 is a plan view of a toilet paper of a toilet roll according to the present invention.
Fig. 2 is a cross-sectional view of a bonding embossed portion of the toilet paper of a toilet roll according to the present invention.
Fig. 3 is a schematic diagram illustrating a process of manufacturing the toilet paper of a toilet roll according to the present invention.
Fig. 4 is a schematic diagram illustrating laminate embossing in the process of manufacturing the toilet paper of a toilet roll according to the present invention.

### Description of Embodiments

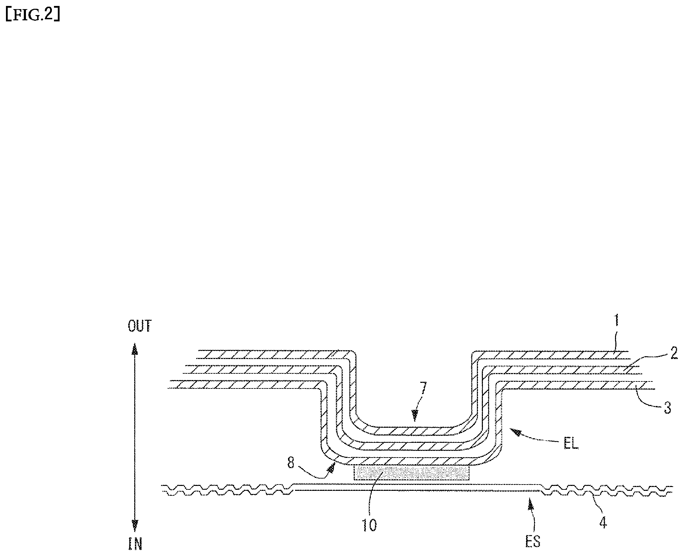

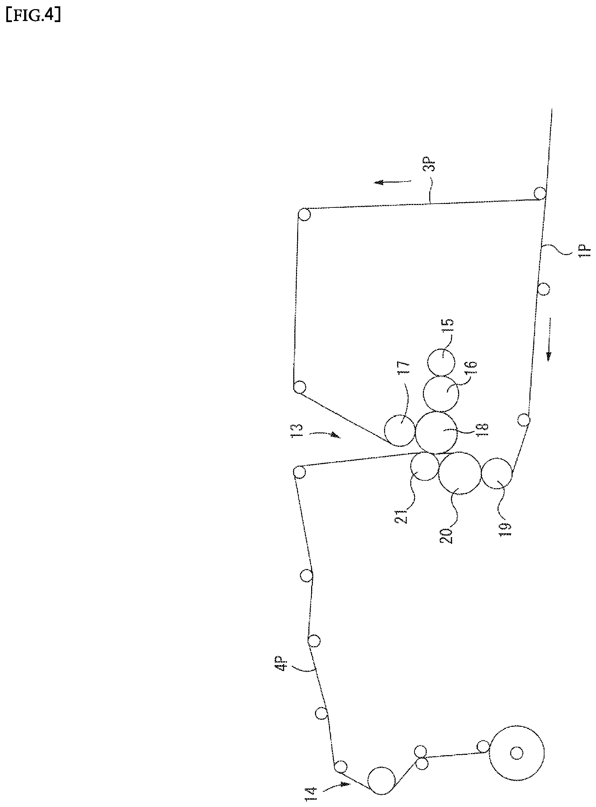

Hereinafter, a toilet paper of a toilet roll bonded with a water-soluble adhesive containing an antibacterial agent according to the present invention will be described in detail with reference to the attached drawings. Figs. 2 and 4 illustrate a four-ply toilet paper, but the present invention is not limited thereto, and the present invention is also applicable to a three-ply toilet paper.

In particular, in order to prevent a toilet paper from being torn due to contact with water in body fluid or cleaning water of a warm-water toilet seat and to reliably exhibit an antibacterial property, it is desirable that the toilet paper is a three-ply or four-ply toilet paper (toilet roll).

The present toilet paper is formed by stacking three or four sheets (plies), and one pair of adjacent sheets are bonded to each other at a large number of bonding points with an adhesive.

It is desirable that the basis weight of each sheet obtained by dividing the basis weight of the product by the number of plies is 10.0 to 18.0 g/m², and particularly 12.0 to 16.0 g/m², and that the paper thickness of each sheet obtained by dividing the paper thickness of the product by the number of plies is 60 to 170 µm, and particularly 80 to 140 µm.

When the basis weight and the paper thickness are excessively low, the paper is easily torn particularly by contact with water. When the basis weight and the paper thickness are excessively high, cost is high, and flexibility is poor.

Here, the basis weight refers to a value measured by the basis weight measurement method of JIS P 8124 (1998). The paper thickness refers to an average of values obtained by sufficiently subjecting a paper to humidity control under conditions of JIS P 8111 (1998), and then measuring the paper thickness using a dial thickness gauge (thickness measuring instrument) "PEACOCK H type" (manufactured by Ozaki MFG. Co., Ltd.) under the same conditions five time. In addition, the basis weight and the paper thickness are measured in a multi-ply state.

At least one pair of adjacent sheets, preferably only one pair of adjacent sheets as described later, are bonded to each other at a large number of bonding points with an adhesive, and the adhesive is formed of polyvinyl alcohol, and contains benzalkonium chloride.

Polyvinyl alcohol is a water-soluble adhesive. This adhesive contains benzalkonium chloride as an antibacterial agent.

Water or water content in body fluid derived from excrement (or warm water for a warm-water toilet seat) penetrates through the sheet during use, comes into contact with the water-soluble adhesive containing the antibacterial agent, dissolves a part of the water-soluble adhesive, and comes into contact with the antibacterial agent in the adhesive. As a result, an antibacterial effect is exhibited, and bacteria can be prevented from transferring to hands.

Generally, carboxymethyl cellulose (CMC) is used as an adhesive for a toilet paper from a viewpoint of being a soft material.

However, it has been found that, when benzalkonium chloride which is safe and has a high antibacterial effect as an antibacterial agent is mixed with CMC, CMC aggregates and tends to lose adhesiveness, and when this adhesive is to be transferred to a sheet by a transfer application method, the amount of transfer is reduced due to a decrease in viscosity, or a situation in which pick-up is impossible is caused, resulting in a trouble in a stacking operation.

On the other hand, it has been found that when polyvinyl alcohol (PVA) is used instead of carboxymethyl cellulose, aggregation of the adhesive due to benzalkonium chloride does not occur.

On the other hand, polyvinyl alcohol (PVA) is harder than carboxymethyl cellulose as a material of an adhesive. As a result, it is considered the flexibility of the stacked sheet is impaired.

However, it has been found that the flexibility of the stacked sheet is not impaired according to a configuration in which adjacent sheets are not entirely bonded to each other but adjacent sheets, preferably one pair of adjacent sheets are bonded to each other at a large number of bonding points with an adhesive.

Also from this viewpoint, an area occupied by embossing EL related to gluing is 2.5 to 30%, and particularly 5 to 15% per m². When the area ratio is small, a design is unlikely to appear. When the area ratio is excessively large, an excessive design appears, which is undesirable as a product design. Moreover, when the area occupied by embossed portions is large, the use amount of the adhesive is large, and the hardness by polyvinyl alcohol (PVA) is apparent.

On the other hand, it has been found that the flexibility of the stacked sheet is not impaired by adjusting the concentration of the adhesive, that is, by reducing the concentration of polyvinyl alcohol (PVA) to, for example, about 0.04 to 0.06% (in terms of solid content ratio) although the concentration of CMC or the like is considered to be, for example, about 0.065 to 0.08% (in terms of solid content ratio), and lowering the application amount of polyvinyl alcohol (PVA) for one bonding point.

It has been found that even when the application amount of polyvinyl alcohol (PVA) is reduced, the adhesive strength is sufficient, and no ply separation occurs.

The toilet paper of the embodiment exhibits sufficient water-disintegrability. For example, it is desirable that the water-disintegrability based on JIS P 4501 after hot air drying for 10 minutes in a dryer in an absolute dry condition at 105°C is within 80 seconds.

This is also because the use amount of the adhesive per unit area is not large, and the bonding point (area ratio) with the adhesive is small.

As the embodiment, it is desirable to contain a 50% benzalkonium chloride solution (as it is) as an antibacterial agent in an amount of 1.2 to 17.8% by mass, particularly 3.6 to 14.4% by mass with respect to 25% polyvinyl alcohol diluted seven times (diluted seven times, substantial 3.6%).

When the amount of benzalkonium chloride is small, the amount of polyvinyl alcohol eluted by contact with water is limited, and as a result, the antibacterial effect of benzalkonium chloride is hardly exhibited. When the amount of benzalkonium chloride is large, the viscosity of the adhesive containing benzalkonium chloride decreases, and the adhesiveness decreases.

It is desirable to control the pH of the polyvinyl alcohol adhesive containing benzalkonium chloride at 6.0 to 7.0. Then, when the adhesive is diluted at an appropriate dilution ratio (for example, as a dilution ratio, adhesive : water = 1 : 5 to 1 : 9, for example, 10 to 170 in ratio) to adjust the pH to, for example, 5.0 to 6.0 (weak acidity), the polyvinyl alcohol adhesive exhibits sufficient adhesiveness, and can have, for example, a viscosity of 8.0 to 14.8 (mPa·s), desirably a viscosity of 8.8 to 11.8 (mPa·s), which is suitable for an operation of lamination.

In addition to this viewpoint, in the first place, even when the polyvinyl alcohol (PVA) adhesive contains benzalkonium chloride, the polyvinyl alcohol (PVA) adhesive does not lose adhesiveness and does not largely change viscosity. Therefore, a stable operation is possible. This is considered to be because the amount of a negatively charged -OH (hydroxyl group) of polyvinyl alcohol is smaller than that of a -OH group of carboxymethyl cellulose, and polyvinyl alcohol is less likely to aggregate than benzalkonium chloride, and does not reduce adhesiveness or viscosity.

It is desirable that the addition amount of benzalkonium chloride is 0.01 to 0.1% by mass with respect to a unit mass of the toilet paper. This is an addition amount that is desirable for exhibiting an antibacterial effect while maintaining safety to a human body, maintaining viscosity, and exhibiting adhesiveness.

It is desirable that the addition amount of the laminate adhesive (polyvinyl alcohol) to the toilet paper having stacked plies is 0.02 to 0.10% (in terms of solid content), and particularly 0.04 to 0.06% by mass (in terms of solid content). When the addition amount is small, not only ply separation is likely to occur, but also the antibacterial effect may be insufficient. When the addition amount is large, the flexibility of an obtained sheet is impaired.

As the antibacterial agent, a quaternary ammonium salt such as benzalkonium chloride or benzethonium chloride, and in addition, for example, an antibacterial cationic surfactant such as a pyridinium salt, an imidazolinium salt, or an isoquinolinium salt can be used.

As described above, it is desirable to control a cold water extraction pH value of the toilet paper to be 6.0 to 8.0.

The cold water extraction pH value of the toilet paper can be measured by a cold water extraction method of JIS P 8133-1998 7.2.

A pH measured by the cold water extraction method is properly 6.0 or more and 8.0 or less, which is suitable. When the pH of the adhesive is 6.0 to 7.0, the pressure sensitive adhesiveness and the adhesion function of the adhesive containing benzalkonium chloride are properly maintained.

At this time, the cold water extraction pH when the adhesive containing benzalkonium chloride is applied to the multilayer toilet paper is 6.0 to 8.0, and a multilayer laminated toilet paper in which the antibacterial effect and the adhesive function of the adhesive are maintained in a well-balanced manner can be obtained.

It is desirable that an innermost sheet is micro-embossed and bonded to embossed portions of an adjacent sheet.

It is desirable that the application amount of the adhesive is 0.02 to 0.10% (in terms of solid content), and particularly 0.04 to 0.06% by mass (in terms of solid content) with respect to the weight of the product.

It is desirable that the area ratio of convex portions of all the embossed portions is 15.0 to 25.0%.

It is desirable that the area ratio of large (deep) embossed portions to which the adhesive (polyvinyl alcohol) is applied is 10.0 to 15.0% among the embossed convex portions. It is desirable that the area ratio of microembossed portions is 5.0 to 10.0%.

Embossing enhances designability and also imparts flexibility to the product toilet paper. In addition, as a result of formation of a space between plies by embossing, water-disintegrability is also affected.

Embossing is applied to a wide area of a paper surface in order to improve designability, bulkiness, softness, and surface smoothness, and is a technique different from embossing in ply pressure bonding such as ply bonding.

A design such as a concave and convex pattern imparted by embossing, the depth of a concave portion (embossment depth), the density of the concave portions (embossment density), the planar shape of each concave portion, and the total area of the concave portions (embossment imparting area) are appropriately determined in consideration of improvement in designability, bulkiness, and softness, and surface smoothness, and are not necessarily limited. However, in the present embodiment, it is desirable that the depth of a concave portion is 0.05 to 2.0 mm, the bottom surface area of one concave portion is 0.3 to 5.0 mm², an embossment area ratio is 5.0 to 15%, and an embossment density is 3 to 25 pieces/cm² from a viewpoint of adhesiveness, designability, and bulkiness in order to perform embossing on a two-ply or three-ply stacked continuous sheet that has been subjected to ply press bonding and to stack-bond the two-ply or three-ply stacked continuous sheet to a one-ply or two-ply stacked continuous sheet in a subsequent stage. Of course, the concave portions may have a plurality of different types of shapes.

Here, the embossment density is a value obtained by counting the number of embossed portions in a range of 10 cm × 10 cm and converting the number into a number per 1 cm × 1 cm. Note that an average value of the numbers in a range of 10 cm × 10 cm at five points is used. The embossment area ratio is measured in a range of 10 cm × 10 cm.

Then, the ratio of the total area of embossed portions obtained by multiplying the number of concave portions within the range by the bottom surface area of the concave portion is defined as the embossment area ratio. Similarly to the embossment density, an average value of the embossment area ratios in a range of 10 cm × 10 cm at five points is used.

The bottom surface area of the concave portion is measured by a one-shot 3D measurement macroscope VR-3200 manufactured by KEYENCE CORPORATION or its equivalent machine, and image analysis software "VR-H2A". Note that the bottom surface area of the concave portion is an average value of the bottom surface areas of five concave portions having the same shape in design. The depth of the concave portion is measured by a one-shot 3D measurement macroscope VR-3200 manufactured by KEYENCE CORPORATION or its equivalent machine, and image analysis software "VR-H2A" or its equivalent software. Measurement is performed under conditions of a magnification of 12 times and a visual field area of 24 mm × 18 mm. However, the magnification and the visual field area can be appropriately changed depending on the size of a concave portion. As a specific measurement procedure, using the above software and the like, an embossment depth (measurement cross-sectional curve) profile at a line segment crossing the longest portion of a peripheral edge of one embossed portion in an image portion indicated by a plane viewpoint is obtained. From the cross-sectional curve of this embossment depth profile, in a contour curve of an image portion indicated by a cross-sectional viewpoint, obtained by removing a component of surface roughness having a shorter wavelength than λc: 800 µm (provided that λc is the "filter that defines a boundary between a roughness component and a waviness component" described in JIS-B0601 "3.1.1.2") with a low pass filter, a minimum value sandwiched between two concave portion edge points that are protruding upward and have the strongest bend and concave portion edge points is determined and defined as a minimum depth value Min. Furthermore, an average value of the depth values of the concave portion edge points is defined as a maximum depth value Max. In this way, embossment depth = maximum value Max - minimum value Min. In addition, a distance (length) between the concave portion edge points on a plane is defined as the length of the longest portion. The above two concave portion edge points that are protruding upward and have the strongest bend are visually selected. Note that for the selection, a contour in the image indicated by a plane viewpoint of the concave portion during the measurement may be referred to. Similarly, the depth of an embossed portion (concave portion) is measured for the shortest portion in a direction perpendicular to the longest portion, and a larger value is adopted as the depth of the embossed portion (concave portion). The above measurement is performed for any 10 embossed portions on a surface, and an average value thereof is defined as the depth of the concave portion.

### (Structure example of toilet paper or toilet roll)

Plies of the toilet paper are stacked to form a toilet roll.

Then, at least one pair of adjacent sheets are bonded to each other at a large number of bonding points with an adhesive.

Fig. 2 illustrates a structure of a four-ply toilet paper. An outer side of the toilet roll is illustrated as OUT, and an inner side of the toilet roll is illustrated as IN. In the embodiment, three plies 1, 2, and 3 from the outer side OUT are integrally and largely (deeply) embossed, and a concave portion 7 is formed on the outer side OUT and a convex portion 8 is formed on the inner side IN.

The inner side of the third ply 3 from the outer side OUT and the ply 4 on the inner side IN are bonded to each other with an adhesive 10.

The adhesive 10 is polyvinyl alcohol, and contains benzalkonium chloride.

In the embodiment, two types of embossing EL and ES are performed. That is, large (deep) embossing EL is performed on the plies 1, 2, and 3, and the plies 1, 2, and 3 are stacked to suppress peeling between the plies. Small (micro) embossing ES is performed on the ply 4, and the ply 3 and the ply 4 are bonded to each other with the adhesive 10 to be combined as one unit.

If necessary, at least one pair of plies among the plies 1, 2, and 3 are bonded to each other at bonding points with an adhesive. However, it is desirable that one pair of plies are bonded to each other with an adhesive. Usually, the plies 1, 2, and 3 can be prevented from being separated by embossing ES. If necessary, ply bonding can be applied to those portions of the plies 1, 2, and 3 or the plies 1, 2, 3, and 4 desirably which are to be both side portions when the plies are formed into a toilet roll to prevent separation of the plies.

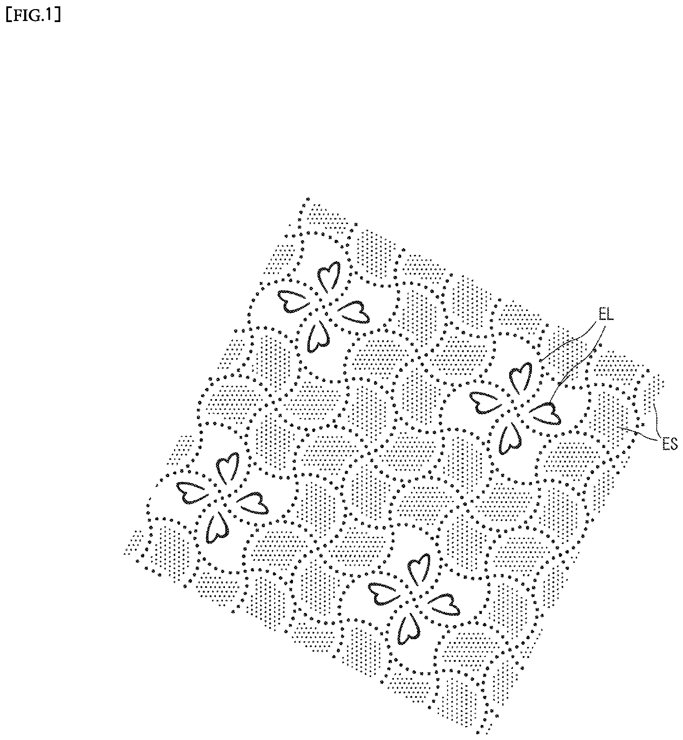

Here, the adhesive 10 may contain ink or the like to be colored. When the adhesive 10 is colored, an adhesive portion (bonded portion) by embossing is colored, and for example, the pattern in Fig. 1 appears, can be visually recognized, and improves designability.

### (Adhesive containing antibacterial substance)

Various surfactants are known as antibacterial agents, and among these, a quaternary ammonium salt represented by benzalkonium chloride exhibits a strong antibacterial property, and is widely used for sterilization at home and in medical sites. Benzalkonium chloride is a cationic surfactant, and has advantages of having a strong antibacterial action, being odorless, having high water solubility, and having low irritation. Therefore, the antibacterial agent is not limited only to benzalkonium chloride, and a cationic surfactant having an antibacterial property, such as benzethonium chloride, which is a quaternary ammonium salt like benzalkonium chloride, a pyridinium salt, an imidazolinium salt, or an isoquinolinium salt, can be used.

### (Method for applying antibacterial agent-containing adhesive)

A fiber raw material of base paper is not particularly limited, but an appropriate raw material pulp used for a toilet paper can be selected and used. Preferable examples thereof include one obtained by blending needle bleached kraft pulp (NBKP) and leaf bleached kraft pulp (LBKP) at an appropriate ratio.

A blend ratio thereof (JIS P 8120) is preferably NBKP : LBKP = 20 : 80 to 80 : 20, and particularly desirably NBKP : LBKP = 30 : 70 to 60 : 40.

As an example of a chemical to be added to the paper material, the dry paper strength enhancer, a softener, and a temporary wet paper strength enhancer can be appropriately added.

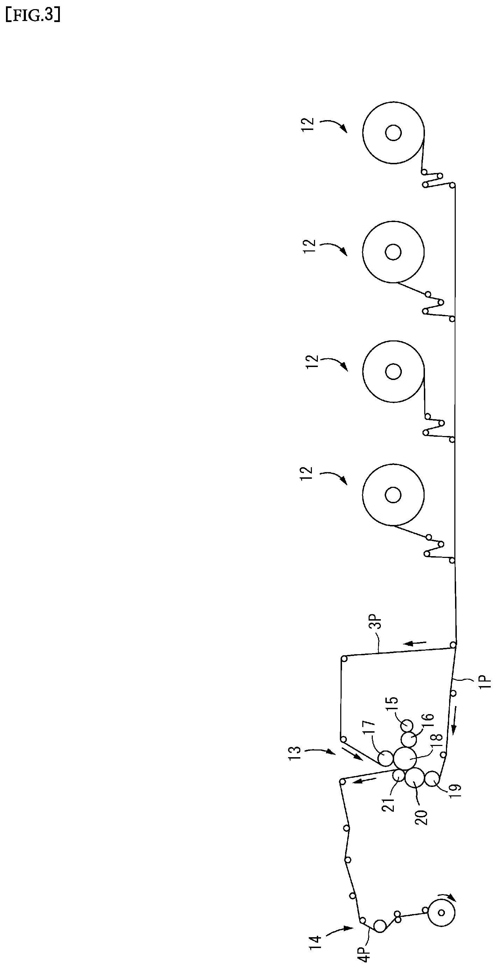

Figs. 3 and 4 illustrate an example of a four-ply toilet paper. A continuous four-ply sheet sent from four original fabric rolls 12 is divided into a three-ply sheet layer 3P and a one-ply sheet 1P, and enter a laminate embossing unit 13. On the three-ply sheet layer 3P, embossed portions 7 and 8 are formed by embossing between a rubber roll 17 and an embossing roll 18. Subsequently, the antibacterial agent-containing adhesive 10 supplied from an anilox roll 15 and applied to an entire surface of a plate 16 is applied to a tip of the convex portion 8 formed on the three-ply sheet layer 3P and sent to a marriage roll 21.

On the other hand, the one-ply sheet 1P is subjected to micro-embossing 4 between the rubber roll 19 and the embossing roll 20, and sent to the marriage roll 21. Then, the one-ply sheet 4 is laminate-bonded to the three-ply sheet layer 3 with the antibacterial agent-containing adhesive applied to the three-ply sheet layer 3 by the marriage roll 21 to form 4 plies. The four-ply toilet paper 4P is wound up by a rewinder 14.

Three plies can be manufactured by a similar manufacturing method only by using a combination of two plies and one ply.

### (Examples of toilet paper)

A first example is a toilet paper including a plurality of sheet layers, in which one pair of the sheet layers are bonded to each other at a large number of points with a water-soluble adhesive containing an antibacterial agent. When description is made with reference to Examples, the toilet paper has a basis weight of 14.6 g/m² in four plies, and a paper thickness of 395 µm.

Polyvinyl alcohol was used as an adhesive.
Benzalkonium chloride was added thereto, and a colorant was also added thereto.

The polyvinyl alcohol containing benzalkonium chloride was controlled at a pH of 5.0 to 8.0, and diluted at a dilution ratio of 1 : 6 at the time of applying the adhesive. The pH was adjusted to weak acidity of 5.0 to 6.0 for use.

As a result, the polyvinyl alcohol maintained adhesiveness and had a viscosity of 10.3 mPa·s suitable for an operation of lamination. The pH adjusted once did not change significantly with time. The adhesive having a pH of 7.0 or less was viscous, and could be stably applied to the toilet paper sheet in the form of Figs. 3 and 4.

### (pH change by antibacterial agent blending ratio)

Table 1 presents a pH change with time when the blending ratio of 50% benzalkonium chloride (Cation G-50, manufactured by Sanyo Chemical Industries, Ltd., pH = 9.0) was changed with respect to a solution obtained by diluting polyvinyl alcohol (130 M, pH 5.97) containing a 25% active component seven times.

**[Table 1]**

| Cation G-50 (g) | 130 M solution diluted seven times (g) | pH value | pH value (ten minute later) |
|---|---|---|---|
| 0 | 100 | 6.037 | |
| 0.05 | 100 | 6.045 | |
| 0.10 | 100 | 6.469 | 6.43 |
| 0.15 | 100 | 6.869 | |
| 0.20 | 100 | 7.013 | 7.03 |
| 0.30 | 100 | 7.665 | 7.34 |
| 0.60 | 100 | 7.991 | 7.98 |

In theory, when the pH is 7.0 or less, it is considered to be viscous. Therefore, when the content of the benzalkonium chloride antibacterial agent having a pH of 9.0 is 0.20% or more, it has been found that the viscosity decreases and it is not suitable for application.

### (pH change by antibacterial agent blending ratio)

Table 2 presents results of measuring a pH value and viscosity when the blending ratio of 50% benzalkonium chloride (Cation F2-50R, pH = 7) was changed with respect to a solution obtained by diluting polyvinyl alcohol (130 M, pH 5.97) containing a 25% active component seven times.

**[Table 2]**

| Cation F2-50R solution (g) | 130 M solution diluted seven times (g) | pH value | Viscosity (mPa·s) |
|---|---|---|---|
| 0 | 500 | 5.74 | 11.4 |
| 7.5 | 500 | 5.36 | 9.2 |
| 15.0 | 500 | 5.25 | 9.8 |
| 24.0 | 500 | 5.37 | 10.2 |
| 50.0 | 500 | 5.54 | 10.7 |

The viscosity did not decrease even when the addition ratio of benzalkonium chloride having a pH of 7.0 was increased to 10%. As a result, it has been found that there is no problem in using the benzalkonium chloride solution having a pH of 7.0 because the viscosity does not decrease.

### (Comparison of softness and the like between CMC and PVA)

Table 3 presents results of measuring the softness and the like of a toilet paper by TSA ("emtecTSA" sold by Nihon Rufuto Co., Ltd.).

HF: parameter for hand feel. The higher a numerical value is, the better hand feel is.

TS7: parameter for softness. The lower a numerical value is, the softer a toilet paper is.

TS750: parameter for smoothness. The lower a numerical value is, the smoother a toilet paper is.

D: parameter for stiffness. The lower a numerical value is, the harder a toilet paper is.

**[Table 3]**

| Adhesive | CMC | PVA |
|---|---|---|
| HF | 84.9 | 85.0 |
| TS7 | 10.72 | 10.64 |
| TS750 | 44.71 | 43.59 |
| D (mm/N) | 2.29 | 2.28 |

There was no difference in paper quality between a case of using carboxymethyl cellulose (CMC) as an adhesive and a case of using polyvinyl alcohol (PVA) as an adhesive. Hand feel and skin feel of polyvinyl alcohol are maintained to almost the same extent as in a case of using carboxymethyl cellulose.

### (Comparison of water-disintegrability between CMC and PVA)

Table 4 presents results of measuring time until a toilet paper is dissolved in water.

**[Table 4]**

| Number of plies | 3 | 4 | 4 |
|---|---|---|---|
| Type of laminate glue | CMC-based | CMC-based | PVA-based |
| Water-disintegrability | 11 seconds 313 | 11 seconds 781 | 11 seconds 143 |

When polyvinyl alcohol was used for a four-ply toilet paper, time until the toilet paper was dissolved in water was shorter than that of a three-ply or four-ply toilet paper using carboxymethyl cellulose as an adhesive. Polyvinyl alcohol had slightly better water-disintegrability.

### (Antibacterial test)

Table 5 presents results of immersing a sample paper piece of 20 mm × 30 mm in 0.1 mL of a culture solution of each of E. coli, Staphylococcus aureus, and Candida albicans in a petri dish, suspending the culture solution in 5 mL of PBS, then taking 1.0 mL of the suspension, culturing the suspension in a petri dish, and counting the number of colonies of bacteria. The test was repeated three times and an antibacterial ratio was calculated. As a control, a culture solution in which a sample paper piece was not immersed was used.

**[Table 5]**

| | | Example 1 | Example 2 | Example 3 | Comparative Example 1 |
|---|---|---|---|---|---|
| Number of plies | | 4 | 4 | 4 | 4 |
| Type of laminate glue | | PVA | PVA | PVA | - |
| Benzalkonium chloride | | 0.05% | 0.08% | 0.10% | - |
| Antibacterial test | E. coli | 50.82 | 60.66 | 90.82 | 0 |
| | Staphylococcus aureus | 53.70 | 61.11 | 81.48 | 0 |
| | Candida albicans | 35.09 | 64.91 | 71.93 | 0 |

The antibacterial test results indicate the number of colonies that suppressed propagation of bacteria in 100 colonies. When propagation of 50 or more colonies is suppressed, an antibacterial effect is obtained, and when propagation of 90 or more colonies is suppressed, a strong antibacterial effect is obtained.

When a sample paper piece using polyvinyl alcohol contained 0.05% of benzalkonium chloride with respect to the mass of the sample paper piece, the sample paper piece performed an antibacterial action on 50 or more of colonies of E. coli and Staphylococcus aureus. Also when a sample paper piece contained 0.08 or 0.10% of benzalkonium chloride with respect to the mass of the sample paper piece, the sample paper piece performed an antibacterial action on 50 or more of colonies of E. coli, Staphylococcus aureus, and Candida albicans, in which an antibacterial effect was recognized. Among these, in Example 3 in which 0.10% benzalkonium chloride was contained with respect to the mass of a sample paper piece, a strong antibacterial effect against E. coli was recognized.

In comprehensive judgment of the above Examples, it has been confirmed that even when a benzalkonium chloride antibacterial agent is added to an adhesive, a toilet paper or a toilet roll that sufficiently exhibits an adhesive function can be stably manufactured.

### Industrial Applicability

The present invention can impart an antibacterial property to a three-ply or four-ply toilet paper or toilet roll.

### Reference Signs List

- 1, 2, 3, 4: Ply
- 7, 8: Embossed portion
- 10: Adhesive
- 13: Laminate embossing unit
- OUT: Roll outer side
- IN: Roll inner side
- EL: Large embossed portion
- ES: Small embossed portion

## Claims

1. A toilet roll comprising a wound roll of three or four stacked sheet layers (1,2,4 or 1,2,3,4),
wherein each sheet layer has a basis weight of 10.0 to 18.0 g/m²,
each sheet layer has a paper thickness of 60 to 170 µm,
an outer sheet layer (1) and an intermediate sheet layer (2 or 2,3) of the toilet roll have first embossed portions (EL) each embossed from an outer side (OUT) of the roll,
an inner sheet layer (4) of the toilet roll has second embossed portions (ES) each being smaller than each first embossed portion (EL),
the inner sheet layer (4) and the adjacent intermediate sheet layer (2 or 3) facing the inner sheet layer (4) are bonded to each other with an adhesive (10) at bonding points on convex portions of the first embossed portions (EL), and
an embossment area occupied by the first embossed portions (EL) is 2.5 to 30% per m²,
the adhesive (10) is formed of polyvinyl alcohol, and contains benzalkonium chloride.

2. The toilet roll according to claim 1, wherein the inner sheet layer (4) and the adjacent intermediate sheet layer (2 or 3) are bonded to each other with an adhesive (10) only at bonding points on convex portions of the first embossed portions (EL), and the bonding points are present only between the inner sheet layer (4) and the adjacent intermediate sheet layer (2 or 3).

3. The toilet roll according to claim 1 or 2, wherein the adhesive contains 1.2 to 17.8% by mass of benzalkonium chloride with respect to polyvinyl alcohol.

4. The toilet roll according to any preceding claim,
wherein a stacked sheet of the three or four stacked sheet layers (1,2,3 or 1,2,3,4) contains 0.02 to 0.08% by mass of polyvinyl alcohol.

## Patentansprüche

1. Toilettenpapierrolle, umfassend eine gewickelte Rolle aus drei oder vier gestapelten Lagen (1, 2, 4 bzw. 1, 2, 3, 4),
wobei jede Lage ein Flächengewicht von 10,0 bis 18,0 g/m² aufweist,
jede Lage eine Papierdicke von 60 bis 170 µm aufweist,
eine äußere Lage (1) und eine mittlere Lage (2 bzw. 2, 3) der Toilettenpapierrolle erste Prägeabschnitte (EL) aufweisen, die jeweils von einer Außenseite (OUT) der Rolle aus geprägt sind,
eine innere Lage (4) der Toilettenpapierrolle zweite Prägeabschnitte (ES) aufweist, die jeweils kleiner sind als jeder erste Prägeabschnitt (EL),
die innere Lage (4) und die der inneren Lage (4) zugewandte benachbarte mittlere Lage (2 bzw. 3) an Verbindungspunkten auf konvexen Abschnitten der ersten Prägeabschnitte (EL) mit einem Klebstoff (10) miteinander verbunden sind, und
eine von den ersten Prägeabschnitten (EL) eingenommene Fläche 2,5 bis 30 % pro m² beträgt,
wobei der Klebstoff (10) aus Polyvinylalkohol besteht und Benzalkoniumchlorid enthält.

2. Toilettenpapierrolle nach Anspruch 1, wobei die innere Lage (4) und die benachbarte mittlere Lage (2 bzw. 3) nur an Verbindungspunkten auf konvexen Abschnitten der ersten Prägeabschnitte (EL) mit einem Klebstoff (10) miteinander verbunden sind, und wobei die Verbindungspunkte nur zwischen der inneren Lage (4) und der benachbarten mittleren Lage (2 bzw. 3) vorhanden sind.

3. Toilettenpapierrolle nach Anspruch 1 oder 2, wobei der Klebstoff 1,2 bis 17,8 Massenprozent Benzalkoniumchlorid, bezogen auf Polyvinylalkohol, enthält.

4. Toilettenpapierrolle nach einem der vorhergehenden Ansprüche, wobei ein gestapeltes Blatt aus den drei oder vier gestapelten Lagen (1, 2, 3 bzw. 1, 2, 3, 4) 0,02 bis 0,08 Massenprozent Polyvinylalkohol enthält.

## Revendications

1. Rouleau de papier hygiénique comprenant un rouleau enroulé de trois ou quatre couches de feuilles empilées (1, 2, 4 ou 1, 2, 3, 4), dans lequel chaque couche de feuille a un grammage de 10,0 à 18,0 g/m², chaque couche de feuille a une épaisseur de papier de 60 à 170 µm, une couche de feuille extérieure (1) et une couche de feuille intermédiaire (2 ou 2, 3) du rouleau de papier hygiénique présentent des premières portions gaufrées (EL), chacune gaufrée depuis un côté extérieur (OUT) du rouleau, une couche de feuille intérieure (4) du rouleau de papier hygiénique présente des deuxièmes portions gaufrées (ES), chacune étant plus petite que chaque première portion gaufrée (EL), la couche de feuille intérieure (4) et la couche de feuille intermédiaire adjacente (2 ou 3) faisant face à la couche de feuille intérieure (4) sont liées l'une à l'autre au moyen d'un adhésif (10) au niveau de points de liaison sur des portions convexes des premières portions gaufrées (EL), et une surface de gaufrage occupée par les premières portions gaufrées (EL) est de 2,5 à 30 % par m², l'adhésif (10) est constitué d'alcool polyvinylique et contient du chlorure de benzalkonium.

2. Rouleau de papier hygiénique selon la revendication 1, dans lequel la couche de feuille intérieure (4) et la couche de feuille intermédiaire adjacente (2 ou 3) sont liées l'une à l'autre au moyen d'un adhésif (10) uniquement au niveau de points de liaison sur des portions convexes des premières portions gaufrées (EL), et les points de liaison sont présents uniquement entre la couche de feuille intérieure (4) et la couche de feuille intermédiaire adjacente (2 ou 3).

3. Rouleau de papier hygiénique selon la revendication 1 ou 2, dans lequel l'adhésif contient de 1,2 à 17,8 % en masse de chlorure de benzalkonium par rapport à l'alcool polyvinylique.

4. Rouleau de papier hygiénique selon l'une quelconque des revendications précédentes, dans lequel une feuille empilée des trois ou quatre couches de feuilles empilées (1, 2, 3 ou 1, 2, 3, 4) contient de 0,02 à 0,08 % en masse d'alcool polyvinylique.
